# EUROPÄISCHE PATENTSCHRIFT

(11) **EP 3 483 979 B1**
(45) Veröffentlichungstag und Bekanntmachung des Hinweises auf die Patenterteilung: **19.08.2020**
(21) Anmeldenummer: 18203453.8
(22) Anmeldetag: 30.10.2018
(51) Int. Cl.: H01M 10/48, H01M 10/625, H01M 10/63, H01M 10/615, H01M 10/6568, H01M 10/6569, H01M 10/6554, H01M 10/613

(54) **TECHNIK ZUR TEMPERATURSTEUERUNG EINES TRAKTIONSENERGIESPEICHERS**
TECHNIQUE FOR REGULATING THE TEMPERATURE OF A TRACTION ENERGY STORAGE UNIT
TECHNIQUE DE LA COMMANDE DE LA TEMPÉRATURE D'UN ACCUMULATEUR D'ÉNERGIE DE TRACTION

(30) Priorität: 09.11.2017 DE 102017126204
(43) Veröffentlichungstag der Anmeldung: 15.05.2019
(73) Patentinhaber: MAN Truck & Bus SE, 80995 München (DE)
(72) Erfinder: Schydlo, Alexander, 81243 München (DE)
(74) Vertreter: v. Bezold & Partner Patentanwälte - PartG mbB

(56) Entgegenhaltungen:
- EP-A1- 2 571 096
- DE-A1-102011 090 146
- US-A1- 2012 003 515

## Beschreibung

Die vorliegende Erfindung betrifft eine Technik zur Steuerung der Temperatur eines Traktionsenergiespeichers in einem elektrisch angetriebenen Kraftfahrzeug. Insbesondere sind eine Vorrichtung zur Temperatursteuerung des Traktionsenergiespeichers und ein entsprechendes Kraftfahrzeug beschrieben.

Der Traktionsenergiespeicher eines elektrisch angetriebenen Kraftfahrzeugs, beispielsweise eines Hybridelektrofahrzeugs (englisch: Hybrid Electric Vehicle oder HEV) oder eines Elektrofahrzeugs (englisch: Battery Electric Vehicle oder BEV) erfordert einen bestimmten Betriebstemperaturbereich oder eine optimale Betriebstemperatur, um den optimalen Betriebszustand des Traktionsenergiespeichers gewährleisten zu können. Die Temperatur des Traktionsenergiespeichers beeinflusst dessen Ladekapazität, Wirkungsgrad und Lebensdauer. Abhängig von der momentanen Belastung des elektrischen Antriebsstrangs mit einem Entladestrom oder abhängig vom Ladestrom wird durch Energiedissipation im Traktionsenergiespeicher ein Abwärmestrom erzeugt, welcher ohne eine Steuerung der Temperatur zu einer Erhöhung der Betriebstemperatur der Batteriezelle im Traktionsenergiespeicher führen würde. Deshalb ist es notwendig, den Traktionsenergiespeicher als Wärmequelle zu kühlen.

Bestehende technische Konzepte sehen vor, die Batteriezellen des Traktionsenergiespeichers mittels eines Kühlmittels, d. h. ohne Phasenumwandlung, bei einer relativ geringen Temperaturdifferenz zwischen Traktionsenergiespeicher und Wärmesenke zu kühlen. Das führt zu Implementierungen, bei denen abhängig von der Umgebungstemperatur verschiedene komplexe Systeme die Batteriezellen des Traktionsenergiespeichers über das Kühlmittel indirekt kühlen. Das Dokument US 2011/0212356 A1 zeigt beispielsweise in Figur 14 einen Kühlkreislauf, in dem durch einen konvektiven Wärmetauscher im Traktionsenergiespeicher und über ein Kühlmittel Wärme an einem Radiator abgegeben wird. Statt den Kreislauf des Kühlmittels an den Radiator anzuschließen kann dieser auch als Sekundärkreislauf über einen Wärmetauscher mit einem Primärkreislauf zur Kühlung des Traktionsenergiespeichers in Wärmeaustausch stehen, wie beispielsweise in Figur 15 des vorgenannten Dokuments gezeigt.

In kalten Wintermonaten sind die Batteriezellen des Traktionsenergiespeichers durch das Kühlmittel beheizt. Das Dokument US 2009/0249807 A1 beschreibt ein solches wahlweises Beheizen, wobei das durch den Traktionsenergiespeicher fließende Kühlmittel in einem Sekundärkreislauf zirkuliert. US 2012/003515 A1 und EP 2 571 096 A1 offenbaren Systeme, die der vorliegenden Erfindung ähnlich sind.

Nachteilig an den bestehenden technischen Konzepten ist der Wirkungsgrad des Gesamtsystems. Von der im Traktionsenergiespeicher chemisch gespeicherten elektrischen Energie muss ein Anteil zum Temperaturmanagement aufgebracht werden, nämlich zur Überwindung des mit dem konvektiven Wärmetauscher am Traktionsenergiespeicher und dem Kühlmittelkreislauf verbundenen hohen Wärmewiderstands.

Somit besteht die Aufgabe, Exergieverluste in Kreisläufen zum Temperaturmanagement eines Traktionsenergiespeichers zu minimieren. Eine alternative oder ergänzende Aufgabe ist es, den Wirkungsgrad und/oder eine thermische Trägheit des Gesamtsystems zu verbessern. Diese Aufgabe oder Aufgaben werden durch eine Technik mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert. Die Erfindung wird durch Anspruch 1 definiert.

Gemäß einem Aspekt ist eine Vorrichtung zur Temperatursteuerung eines Traktionsenergiespeichers eines elektrisch angetriebenen Kraftfahrzeuges bereitgestellt. Die Vorrichtung umfasst einen Traktionsenergiespeicher zur Speicherung elektrischer Energie. Der Traktionsenergiespeicher steht in Energieaustausch mit einem elektrischen Antriebsstrang des Kraftfahrzeugs oder ist mit diesem in Energieaustausch bringbar. Ferner umfasst die Vorrichtung einen speicherseitigen Wärmeübertrager. Der speicherseitige Wärmeübertrager steht zum Wärmeaustausch in direktem Wärmekontakt mit dem Traktionsenergiespeicher. Ferner umfasst die Vorrichtung einen umgebungsseitigen Wärmeübertrager. Der umgebungsseitige Wärmeübertrager ist zum Wärmeaustausch mit einer Umgebung des Kraftfahrzeugs ausgebildet. Ferner umfasst die Vorrichtung einen Kältemittelkreislauf, der dazu ausgebildet ist, ein Kältemittel in einem ersten Aggregatzustand dem speicherseitigen Wärmeübertrager und in einem zweiten Aggregatzustand dem umgebungsseitigen Wärmeübertrager zuzuführen. Durch eine latente Wärme beim Übergang zwischen dem ersten und zweiten Aggregatzustand des Kältemittels kann dem Traktionsenergiespeicher effektiv Wärme entnommen und an die Umgebung abgeführt werden. Ferner kann dem Traktionsenergiespeicher durch die latente Wärme des Kältemittels effektiv Wärme zugeführt werden. Ein hoher Widerstand der Wärmeleitung, wie er bei einem konvektiven Wärmeaustauscher am Traktionsenergiespeicher auftritt, kann durch den direkten Wärmekontakt zwischen Traktionsenergiespeicher und Kältemittelkreislauf vermieden werden. Der Traktionsenergiespeicher kann auch als Batterieeinheit bezeichnet werden.

Der Kältemittelkreislauf kann dazu ausgebildet sein, das Kältemittel im ersten Aggregatzustand dem speicherseitigen Wärmeübertrager zuführen, im zweiten Aggregatzustand dem speicherseitigen Wärmeübertrager zu entnehmen, im zweiten Aggregatzustand dem umgebungsseitigen Wärmeübertrager zuzuführen und im ersten Aggregatzustand dem umgebungsseitigen Wärmeübertrager zu entnehmen.

Der umgebungsseitige Wärmeübertrager kann einen Radiator und/oder einen Lüfter umfassen. Die Umgebung kann Umgebungsluft umfassen.

Der Kältemittelkreislauf kann in einer ersten Strömungsrichtung zwischen dem speicherseitigen Wärmeübertrager und dem umgebungsseitigen Wärmeübertrager ein Expansionsventil umfassen. Das Expansionsventil kann auch als Drossel bezeichnet werden. Die erste Strömungsrichtung kann einen flüssigen Aggregatzustand des Kältemittels betreffen.

Der Kältemittelkreislauf kann in einer zweiten Strömungsrichtung zwischen dem speicherseitigen Wärmeübertrager und dem umgebungsseitigen Wärmeübertrager einen Kompressor umfassen. Der Kompressor kann auch als Verdichter bezeichnet werden. Die zweite Strömungsrichtung kann einen gasförmigen Aggregatzustand des Kältemittels betreffen.

Die erste Strömungsrichtung kann der zweiten Strömungsrichtung entgegengesetzt sein. Die erste Strömungsrichtung kann von der zweiten Strömungsrichtung räumlich getrennt sein. Die erste Strömungsrichtung und die zweite Strömungsrichtung können den Kältemittelkreislauf schließen.

Ein Druck des Kältemittels am speicherseitigen Wärmeübertrager kann abhängig von Ist-Temperatur und/oder Soll-Temperatur des Traktionsenergiespeichers gesteuert sein, beispielsweise so dass das Kältemittel beim am speicherseitigen Wärmeübertrager herrschenden Druck und der Ist-Temperatur und/oder der Soll-Temperatur des Traktionsenergiespeichers im zweiten Aggregatzustand vorliegt. Der am speicherseitigen Wärmeübertrager herrschende Druck kann mittels des Expansionsventils und/oder des Kompressors gesteuert sein. Alternativ oder zugleich kann ein Druck des Kältemittels am umgebungsseitigen Wärmeübertrager abhängig von einer Ist-Temperatur des umgebungsseitigen Wärmeübertragers und/oder der Umgebung des Kraftfahrzeugs gesteuert sein, beispielsweise so dass das Kältemittel beim am umgebungsseitigen Wärmeübertrager herrschenden Druck und der umgebungsseitigen Ist-Temperatur im ersten Aggregatzustand vorliegt. Der am umgebungsseitigen Wärmeübertrager herrschende Druck und der am speicherseitigen Wärmeübertrager herrschende Druck können mittels des Expansionsventils und des Kompressors jeweils gesteuert sein.

Der umgebungsseitige Wärmeüberträger und der speicherseitige Wärmeüberträger können jeweils wahlweise als Verdampfer und Kondensator ausgebildet sein (beispielsweise sequentiell als Verdampfer und Kondensator fungieren). Eine wahlweise Ausbildung der beiden Wärmeüberträger als Verdampfer bzw. Kondensator kann die Steuerung (vorzugsweise Regelung) des am jeweiligen Wärmeübertrager herrschenden Drucks und/oder der Strömungsrichtung umfassen. Beispielsweise kann der jeweilige Wärmeübertrager ohne strukturelle Änderung sowohl als Verdampfer als auch als Kondensator ausgebildet sein.

Das Kältemittel kann dazu ausgebildet sein, beispielsweise in Abgrenzung zu einem Kühlmittel, einen Phasenübergang vom ersten zum zweiten Aggregatzustand und umgekehrt am speicherseitigen bzw. umgebungsseitigen Wärmeübertrager zu durchlaufen.

Zumindest im ersten Betriebszustand kann der erste Aggregatzustand den flüssigen Aggregatzustand des Kältemittels umfassen, der speicherseitige Wärmeübertrager als Verdampfer ausgebildet sein, der zweite Aggregatzustand den gasförmigen Aggregatzustand des Kältemittels umfassen und/oder der umgebungsseitige Wärmeübertrager als Kondensator ausgebildet sein. Der erste Betriebszustand kann einen den Traktionsenergiespeicher kühlenden Betriebszustand umfassen. Im ersten Betriebszustand kann Wärme vom Traktionsenergiespeicher über das Kältemittel an die Umgebung abgegeben werden.

Im ersten Betriebszustand des Kältemittelkreislaufs kann das Expansionsventil in der ersten Strömungsrichtung vom umgebungsseitigen Wärmeübertrager zum speicherseitigen Wärmeübertrager angeordnet sein. Im ersten Betriebszustand des Kältemittelkreislaufs kann der Kompressor in der zweiten Strömungsrichtung vom speicherseitigen Wärmeübertrager zum umgebungsseitigen Wärmeübertrager angeordnet sein.

Zumindest im zweiten Betriebszustand kann der erste Aggregatzustand den gasförmigen Aggregatzustand des Kältemittels umfassen, der speicherseitige Wärmeübertrager als Kondensator ausgebildet sein, der zweite Aggregatzustand den flüssigen Aggregatzustand des Kältemittels umfassen und/oder der umgebungsseitige Wärmeübertrager als Verdampfer ausgebildet sein. Der zweite Betriebszustand kann einen den Traktionsenergiespeicher wärmenden Betriebszustand umfassen. Im zweiten Betriebszustand kann dem Traktionsenergiespeicher über das Kältemittel Wärme von der Umgebung zugeführt werden.

Im zweiten Betriebszustand des Kältemittelkreislaufs kann das Expansionsventil in der ersten Strömungsrichtung vom speicherseitigen Wärmeübertrager zum umgebungsseitigen Wärmeübertrager angeordnet sein. Im zweiten Betriebszustand des Kältemittelkreislaufs kann der Kompressor in der zweiten Strömungsrichtung vom umgebungsseitigen Wärmeübertrager zum speicherseitigen Wärmeübertrager angeordnet sein. Das im zweiten Betriebszustand des Kältemittelkreislaufs eingesetzte Expansionsventil kann dasselbe Expansionsventil sein, das auch im ersten Betriebszustand eingesetzt wird, oder ein weiteres Expansionsventil des Kältemittelkreislaufs, das im ersten Betriebszustand nicht zugeschalten ist. Vorzugsweise ist derselbe Kompressor im ersten Betriebszustand und im zweiten Betriebszustand eingesetzt.

Die Vorrichtung kann ferner eine Steuerungseinheit umfassen, die dazu ausgebildet ist, abhängig vom Vorzeichen einer Differenz zwischen einer vorgegeben Soll-Temperatur und einer erfassten Ist-Temperatur des Traktionsenergiespeichers wahlweise den ersten Betriebszustand oder den zweiten Betriebszustand des Kältemittelkreislaufs zu steuern. Die Differenz kann jedes (beispielsweise lineare oder nicht-lineare) Maß für eine Abweichung zwischen Soll-Temperatur und Ist-Temperatur des Traktionsenergiespeichers sein. Das Vorzeichen der Differenz kann angeben, beispielsweise unabhängig vom implementierten Maß der Abweichung, ob die Ist-Temperatur die Soll-Temperatur überschreitet oder unterschreitet.

Das Steuern des ersten Betriebszustands und des zweiten Betriebszustands kann ein Umschalten von Wegeventilen, beispielsweise mit mindestens zwei Schaltstellungen jeweils für den ersten Betriebszustand bzw. den zweiten Betriebszustand umfassen.

Der direkte Wärmekontakt kann zwischen speicherseitigem Wärmeübertrager und Zellen des Traktionsenergiespeichers ausschließlich durch Wärmeleitung erreicht sein. Die Wärmeleitung kann auch als Wärmediffusion bezeichnet werden. Vorzugsweise ist der direkte Wärmekontakt zwischen speicherseitigem Wärmeübertrager und den Zellen des Traktionsenergiespeichers ausschließlich durch Wärmeleitung erreicht und/oder ohne einen weiteren Kreislauf (Sekundärkreislauf).

Die Wärmeleitung kann ausschließlich durch einen Feststoff (beispielsweise Metall, insbesondere Aluminium) erreicht sein. Der direkte Wärmekontakt kann ausschließlich durch Wärmeleitung innerhalb des Traktionsenergiespeichers bestehen. Beispielsweise können sich mehrere Wärmeleiter vom speicherseitigen Wärmeübertrager zwischen die Zellen erstrecken.

Der Traktionsenergiespeicher kann einen metallischen Grundkörper umfassen, der sich beispielsweise über eine Grundfläche des Traktionsenergiespeichers erstreckt. Der speicherseitige Wärmeübertrager kann am Grundkörper direkt anliegt oder mit dem Grundkörper integral-einstückig ausgebildet ist.

Am Grundkörper können kreislaufseitige Lamellen in direktem Wärmekontakt angeordnet oder integral-einstückig angeformt sein, die vom Kältemittel durchströmt werden. Alternativ oder ergänzend können am Grundkörper zellseitige Lamellen angeordnet oder integral-einstückig angeformt sein, die sich zwischen den Zellen erstrecken.

Der Grundkörper kann eine Grundplatte, ein Gehäuse des Traktionsenergiespeichers oder eine Halbschale des Gehäuses umfassen. Der Grundkörper kann aus Aluminium gefertigt sein. Der Grundkörper kann sich horizontal im Kraftfahrzeug erstrecken, beispielsweise am Fahrzeugboden. Die kreislaufseitigen Lamellen können an einer Außenseite der Grundplatte bzw. des Gehäuses angeordnet oder angeformt sein. Die zellseitigen Lamellen können an einer der Außenseite gegenüberliegenden Innenseite der Grundplatte bzw. des Gehäuses angeordnet oder angeformt sein.

Die Vorrichtung kann ferner einen Kühlmittelkreislauf umfassen, der einen am Traktionsenergiespeicher angeordneten konvektiven Wärmeübertrager, einen Radiator und eine Umwälzpumpe aufweist. Die Umwälzpumpe kann dazu ausgebildet sein, ein Kühlmittel durch den konvektiven Wärmeübertrager und den Radiator umzuwälzen oder zu zirkulieren.

Der Traktionsenergiespeicher kann zwei integrierte und voneinander (beispielsweise hydraulisch) separate Wärmeübertrager umfassen, nämlich den speicherseitigen Wärmeübertrager des Kältemittelkreislaufs und den konvektiven Wärmeübertrager des Kühlmittelkreislaufs. Der speicherseitige Wärmeübertrager kann ein Verdampfer und/oder Kondensator sein, in dem die Wärmeübertragung des Kältemittels mit Phasenumwandlung realisiert ist. Der Kältemittelkreislauf kann einen latenten und einen fühlbare Wärmestrom übertragen. Im konvektiven Wärmeübertrager kann die Wärmeübertragung (zur Kühlung oder Heizung des Traktionsenergiespeichers) durch Konvektion und Wärmeleitung realisiert sein.

Der umgebungsseitige Wärmeübertrager des Kältemittelkreislaufs kann am Radiator des Kühlmittelkreislaufs angeordnet sein. Der Radiator des Kühlmittelkreislaufs kann in Wärmekontakt mit dem umgebungsseitigen Wärmeübertrager stehen. Der Radiator kann, beispielsweise zusammen mit einem Ventilator, an einer Fahrzeugfront des Kraftfahrzeugs angeordnet sein.

Die Vorrichtung kann die Temperatur der Zellen des Traktionsenergiespeichers steuern. Beispielsweise kann die Steuerungseinheit mittels mindestens eines zur Erfassung der Ist-Temperatur am Traktionsenergiespeicher angeordneten Temperatursensors die Temperatur der Zellen regeln.

Eine Steuerungseinheit der Vorrichtung kann dazu ausgebildet sein, abhängig von der Größe (z. B. vom Betrag) einer Differenz zwischen einer vorgegeben Soll-Temperatur und einer erfassten Ist-Temperatur des Traktionsenergiespeichers wahlweise entweder den Kältemittelkreislaufs oder den Kühlmittelkreislauf zu steuern (beispielsweise zu betätigen). Die Steuerungseinheit kann dazu ausgebildet sein, abhängig vom Betrag der Differenz zwischen der vorgegeben Soll-Temperatur und der erfassten Ist-Temperatur des Traktionsenergiespeichers wahlweise entweder den Kältemittelkreislaufs oder den Kühlmittelkreislauf zu betreiben.

Die Steuerungseinheit kann dazu ausgebildet sein, den Kältemittelkreislauf zu steuern (z. B. zu betreiben), wenn der Differenzbetrag größer als ein vorbestimmter Schwellwert ist. Alternativ oder ergänzend kann die Steuerung dazu ausgebildet sein, den Kühlmittelkreislauf zu steuern (z. B. zu betreiben), wenn der Differenzbetrag kleiner als der vorbestimmte Schwellwert ist.

Der Kältemittelkreislauf und der Kühlmittelkreislauf können voneinander hydraulisch getrennt und/oder thermisch entkoppelt sein. Ein Energieaustausch (oder eine Energietransformation) und/oder ein Fluidaustausch zwischen dem Kältemittelkreislauf und dem Kühlmittelkreislauf kann unterbleiben.

Am umgebungsseitigen Wärmeübertrager kann ein regenerativer Wärmeübertrager angeordnet sein. Alternativ oder ergänzend kann am speicherseitigen Wärmeübertrager ein Ejektor angeordnet sein.

Gemäß einem weiteren Aspekt ist ein Kraftfahrzeug, insbesondere ein Nutzfahrzeug, bereitgestellt, mit einer Vorrichtung gemäß dem vorstehenden Aspekt in einer der Ausführungsvarianten. Das Nutzfahrzeug kann ein Lastkraftwagen, eine Sattelzugmaschine oder ein Bus sein.

Weitere Merkmale und Vorteile der Erfindung werden im Folgenden unter Bezugnahme auf die beigefügten Zeichnungen beschrieben. Es zeigen:
- Figur 1: ein schematisches Blockschaltbild eines Ausführungsbeispiels einer Vorrichtung zur Temperatursteuerung eines Traktionsenergiespeichers;
- Figur 2: schematische Graphen einer temperaturabhängigen Steuerung eines Ausführungsbeispiels der Vorrichtung der Figur 1;
- Figur 3: ein schematisches Blockschaltbild eines Ausführungsbeispiels der Vorrichtung mit weiteren Wärmequellen und Wärmesenken;
- Figur 4: ein schematisches Blockschaltbild eines Ausführungsbeispiels der Vorrichtung in einem konvektiv heizenden Betriebszustand;
- Figur 5: ein schematisches Blockschaltbild eines Ausführungsbeispiels der Vorrichtung, das zwischen einem kühlenden und einem heizenden Betriebszustand umschaltbar ist; und
- Figur 6: ein schematisches Blockschaltbild einer Ausgestaltung eines Kältemittelkreislaufs in einem Ausführungsbeispiel der Vorrichtung.

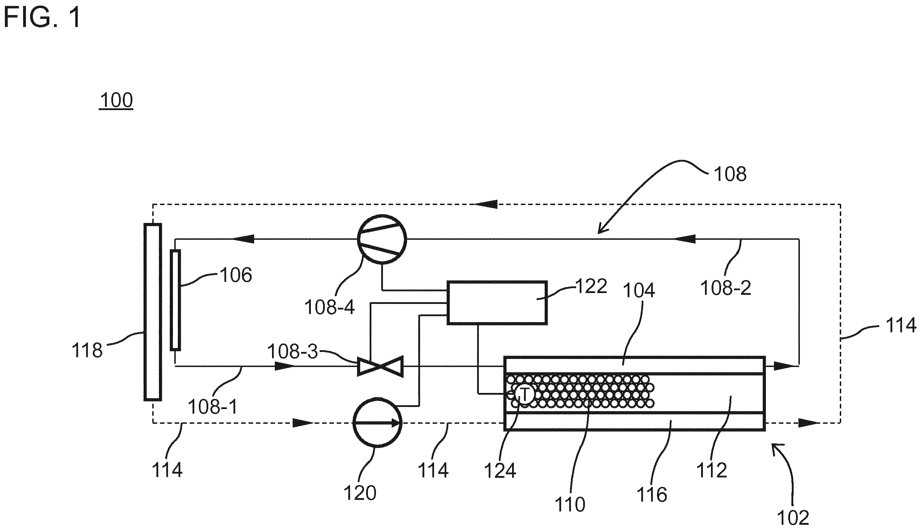

Figur 1 zeigt ein schematisches Blockschaltbild eines Ausführungsbeispiels einer allgemein mit Bezugszeichen 100 bezeichneten Vorrichtung zur Temperatursteuerung eines Traktionsenergiespeichers 102 eines elektrisch angetriebenen Kraftfahrzeugs. Die Vorrichtung 100 umfasst den Traktionsenergiespeicher 102 zur Speicherung elektrischer Energie. Der Traktionsenergiespeicher 102 steht in Energieaustausch mit einem elektrischen Antriebsstrang des Kraftfahrzeugs oder ist in Energieaustausch mit dem Antriebsstrang bringbar.

Der Antriebsstrang des Kraftfahrzeugs oder beispielsweise ein Batteriemanagementsystem sind zur Übersichtlichkeit in der Figur 1 nicht dargestellt. Gleichwohl kann die Vorrichtung, insbesondere hinsichtlich funktioneller Merkmale einer Steuerung oder Regelung, im Batteriemanagementsystem implementiert sein.

Die Vorrichtung 100 umfasst ferner einen speicherseitigen Wärmeübertrager 104, der zum Wärmeaustausch mit dem Traktionsenergiespeicher 102 in direktem Wärmekontakt mit diesem steht. Ferner umfasst die Vorrichtung 100 einen umgebungsseitigen Wärmeübertrager 106, der zum Wärmeaustausch mit einer Umgebung des Kraftfahrzeugs ausgebildet ist. Ferner umfasst die Vorrichtung 100 einen Kältemittelkreislauf 108, der dazu ausgebildet ist, ein Kältemittel in einem ersten Aggregatzustand dem speicherseitigen Wärmeübertrager 104 und in einem zweiten Aggregatzustand dem umgebungsseitigen Wärmeübertrager 106 zuzuführen.

Im in Fig. 1 gezeigten Ausführungsbeispiel der Vorrichtung 100 ist der erste Aggregatzustand ein flüssiger Aggregatzustand des Kältemittels, das in einer ersten Strömungsrichtung 108-1 des Kältemittelkreislaufs 108 dem speicherseitigen Wärmeübertrager 104 zugeführt wird. Der speicherseitige Wärmeübertrager 104 ist als Verdampfer ausgebildet. Stromabwärts des speicherseitigen Wärmeübertragers 104 wird in einer zweiten Strömungsrichtung 108-2 des Kältemittelkreislaufs 108 das Kältemittel im gasförmigen zweiten Aggregatzustand dem umgebungsseitigen Wärmeübertrager 106 zugeführt, der als Kondensator ausgebildet ist. Hierzu ist in der ersten Strömungsrichtung 108-1 des Kältemittelkreislaufs 108 vom Kondensator als umgebungsseitigen Wärmeübertrager 106 zum Verdampfer als speicherseitigem Wärmeübertrager 104 ein Expansionsventil 108-3 zur Druckminderung einer flüssigen Phase des Kältemittels angeordnet. In der zweiten Strömungsrichtung 108-2 des Kältemittelkreislaufs 108 ist vom Verdampfer als dem speicherseitigen Wärmeübertrager 104 zum Kondensator als dem umgebungsseitigen Wärmeübertrager 106 ein Kompressor 108-4 zur Verdichtung einer gasförmigen Phase des Kältemittels angeordnet.

Während im in Figur 1 gezeigten Ausführungsbeispiel der Vorrichtung 100 durch den Kältemittelkreislauf 108 Wärme vom Traktionsenergiespeicher 102 entnommen und an die Umgebung des Kraftfahrzeugs mittels des umgebungsseitigen Wärmeübertragers 106 abgegeben werden kann, kann in einer mit jedem Ausführungsbeispiel kompatiblen Variante, und vorzugsweise steuerbar in ein und demselben Ausführungsbeispiel, der speicherseitige Wärmeübertrager 104 als Kondensator ausgebildet sein und der umgebungsseitige Wärmeübertrager 106 als Verdampfer ausgebildet sein. Der speicherseitige Wärmeübertrager 104 ist hinsichtlich einer solchen kondensierten flüssigen Phase des Kältemittels in einer entsprechenden ersten Strömungsrichtung 108-1 mit einem entsprechenden Expansionsventil 108-3 mit dem als Verdampfer ausgebildeten umgebungsseitigen Wärmeübertrager 106 verbunden. Dieser ist in einer entsprechenden zweiten Strömungsrichtung 108-2 über denselben oder einen weiteren Kompressor 108-4 mit dem als Kondensator ausgebildeten speicherseitigen Wärmeübertrager 104 verbunden.

Der direkte Wärmekontakt zwischen dem speicherseitigen Wärmeübertrager 104 und dem Traktionsenergiespeicher 102 kann durch einen direkten Wärmekontakt zwischen dem speicherseitigen Wärmeübertrager 104 und Zellen 110 des Traktionsenergiespeichers 102 erreicht sein. Hierbei kann der direkte Wärmekontakt ausschließlich durch Wärmeleitung erreicht sein. Beispielsweise umfasst der Traktionsenergiespeicher 102 einen metallischen Grundkörper, an dem eine Vielzahl von Zellen 110 des Traktionsenergiespeichers 102 angeordnet sind. Der direkte Wärmekontakt kann durch die Wärmeleitung des metallischen Grundkörpers erreicht sein. Der metallische Grundkörper kann eine Aluminiumplatte oder ein Aluminiumgehäuse des Traktionsenergiespeichers 102 sein.

Optional umfasst die Vorrichtung 100 einen Kühlmittelkreislauf 114. Der Kühlmittelkreislauf 114 umfasst einen konvektiven Wärmeübertrager 116 in Wärmekontakt mit den Zellen 110 des Traktionsenergiespeichers 102. Der Kühlmittelkreislauf 114 umfasst ferner einen Radiator 118 und eine Umwälzpumpe 120, die dazu ausgebildet ist, ein Kühlmittel des Kühlmittelkreislaufs 114 durch den konvektiven Wärmeübertrager 116 und den Radiator 118 umzuwälzen.

Der umgebungsseitige Wärmeübertrager 106 ist am Radiator 118 angeordnet. In einer ersten Variante steht der umgebungsseitige Wärmeübertrager 106 in direktem Wärmekontakt mit dem Radiator 118. Beispielsweise nutzen der umgebungsseitige Wärmeübertrager 106 und der Radiator 118 dieselbe Lamellenanordnung. In einer zweiten Variante ist der Radiator 118 von einem beispielsweise durch einen Ventilator bewirkten Luftstrom durchströmt, und der umgebungsseitige Wärmeübertrager 106 ist in Richtung des Luftstroms vor oder hinter dem Radiator 118 angeordnet.

Jedes Ausführungsbeispiel der Vorrichtung 100 kann, wie beispielsweise anhand des Blockschaltbilds der Figur 1 schematisch gezeigt, eine Steuerungseinheit 122 umfassen. In einer ersten Ausgestaltung ist die Steuerungseinheit 122 dazu ausgebildet, Betriebszustände des Kältemittelkreislaufs 108 zu steuern. Beispielsweise ist die Steuerungseinheit 122 dazu ausgebildet, abhängig vom Vorzeichen der Differenz zwischen einer vorgegebenen Soll-Temperatur für den Traktionsenergiespeicher 102 und einer erfassten Ist-Temperatur des Traktionsenergiespeichers 102 einen ersten Betriebszustand zur Kühlung des Traktionsenergiespeichers 102 oder einen zweiten Betriebszustand zum Erwärmen des Traktionsenergiespeichers 102 zu steuern.

In einer zweiten Ausgestaltung der Steuerungseinheit 122, die mit der ersten Ausgestaltung kombinierbar ist, ist die Steuerungseinheit 122 dazu ausgebildet, abhängig von Betriebsparametern des Kraftfahrzeugs und/oder einer Umgebungstemperatur den Betrieb des Kühlmittelkreislaufs 114 zu steuern. Beispielsweise ist die Steuerungseinheit 122 dazu ausgebildet, abhängig von einer Abweichung (beispielsweise einem Betrag der Differenz) zwischen der vorgegebenen Soll-Temperatur und der erfassten Ist-Temperatur des Traktionsenergiespeichers 102 wahlweise den Kältemittelkreislauf und/oder den Kühlmittelkreislauf zu steuern.

So kann abhängig von Betriebsparametern und/oder der Umgebungstemperatur die jeweils für den Gesamtwirkungsgrad der Temperatursteuerung des Traktionsenergiespeichers 102 optimale Kreislauf 108 und/oder 114 zur Steuerung der Temperatur des Traktionsenergiespeichers 102 eingesetzt werden. Beispielsweise kann bei einer Temperaturabweichung kleiner als einem vorbestimmten Schwellwert der Kühlmittelkreislauf 114 eingesetzt werden. Ist die Temperaturabweichung größer als der vorbestimmte Schwellwert kann der Kältemittelkreislauf 108 eingesetzt werden.

Die vorgenannten Ausgestaltungen der Steuerungseinheit 122 sind kombinierbar, beispielsweise indem der Einsatz des Kältemittelkreislaufs 108 gemäß dem ersten oder zweiten Betriebszustand des Kältemittelkreislaufs 108 differenziert gesteuert wird.

Die Vorrichtung 100 ermöglicht, abhängig von der Umgebungstemperatur die Temperatur des Traktionsenergiespeichers 102 zu steuern, nämlich wahlweise mit dem Kühlmittel unter Einsatz eines konventionellen Kühlmittelkreislaufs 114 und direkt mit einem Kältemittel unter Phasenumwandlung im Kältemittelkreislauf 108, d. h. durch den linksläufigen Kältemittelkreisprozess. Die Umgebungstemperatur bestimmt in der Steuerungseinheit 122 die technische und/oder ökonomische Rentabilitätsgrenze der Zuschaltung einer der beiden Kreisläufe 108 und 114.

In einer Implementierung der Steuerungseinheit 122 wird, wenn die Umgebungstemperatur niedriger als die maximal zulässige Temperatur des Traktionsenergiespeichers 102 ist, die Umgebung als Wärmequelle genutzt. Das heißt, die zur Verfügung stehende Umgebungsluft kühlt das Kühlmittel im Radiator 118 und somit den konvektiven Wärmeübertrager 116 am Traktionsenergiespeicher 102. Wenn die Umgebungstemperatur höher als die maximal zulässige Temperatur des Traktionsenergiespeichers 102 ist, werden die Zellen 110 des Traktionsenergiespeichers 102 mittels des Kältemittels gekühlt, d. h. durch Steuern des Kältemittelkreislaufs 108.

Beide Kreisläufe 108 und 114 sind hydraulisch und/oder thermisch entkoppelt. Beispielsweise findet keine Energietransformation vom Kältemittelkreislauf 108 zum Kühlmittelkreislauf 114 statt. Exergieverluste (d. h. Verluste der nutzbaren Energie) des Gesamtsystems und der Energieverbrauch werden durch die Entkopplung reduziert. Ferner ist es möglich, aus dem Kältemittelkreislauf 108 und/oder dem Kühlmittelkreislauf 114 weitere Komponenten des Kraftfahrzeugs, insbesondere einen Fahrgastraum, zu klimatisieren (d. h. wahlweise zu heizen oder zu kühlen).

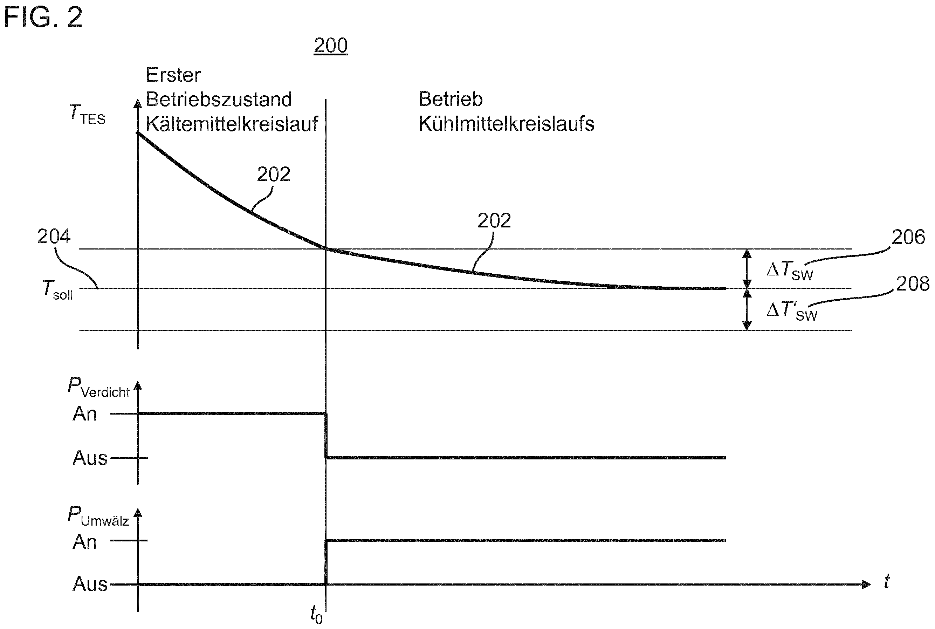

Figur 2 zeigt schematisch eine Temperaturabhängigkeit 200, die in der Steuerungseinheit 122 implementiert sein kann. Die in Figur 2 gezeigte beispielhafte Temperaturabhängigkeit 200 ist anhand zeitabhängiger Graphen dargestellt. Die Zeitachse ist die horizontale Achse in der Figur 2. Vor einem Zeitpunkt t₀ steuert die Steuerungseinheit 122 den ersten Betriebszustand des Kältemittelkreislaufs 108 aufgrund einer Differenz zwischen der Ist-Temperatur 202 des Traktionsenergiespeichers 102 und einer vorgegebenen Soll-Temperatur 204 für den Traktionsenergiespeicher 102, die größer als der Schwellwert ΔT_{SW} 206 ist. Durch den Einsatz des Kältemittelkreislaufs 108 strebt die Ist-Temperatur 202 mit einer hohen Kühlrate zur Soll-Temperatur 204. Unterschreitet die Temperaturdifferenz zwischen Ist-Temperatur 202 und Soll-Temperatur 204 den Temperaturschwellwert 206, wie in Figur 2 zum Zeitpunkt t₀ gezeigt, wechselt die Steuerungseinheit 122 vom ersten Betriebszustand des Kältemittelkreislaufs 108 zum Betrieb des Kühlmittelkreislaufs 114. So kann mit dem geringeren Energieaufwand zum Betrieb der Umwälzpumpe 120 ohne den Betrieb des Kompressors 108-4 die weitere Konvergenz der Ist-Temperatur 202 zur Soll-Temperatur 204 bewirkt werden.

Während in Figur 2 schematisch der Übergang vom ersten Betriebszustand des Kältemittelkreislaufs 108 zum Betrieb des Kühlmittelkreislaufs 114 zur Kühlung des Traktionsenergiespeichers 102 dargestellt ist, kann die Steuerung 122 ferner dazu ausgebildet sein, zum Erwärmen des Traktionsenergiespeichers 102 bei einer negativen Temperaturdifferenz zwischen der Ist-Temperatur 202 und der Soll-Temperatur 204 den zweiten Betriebszustand des Kältemittelkreislaufs 108 steuern, bis die Temperaturdifferenz betragsmäßig unter den Schwellwert 206 oder einen für den zweiten Betriebszustand spezifischen Schwellschwert 208 fällt. Wird der Schwellwert 206 oder 208 von der negativen Temperaturdifferenz betragsmäßig unterschritten, bewirkt die Steuerungseinheit 122 den Übergang vom zweiten Betriebszustand des Kältemittelkreislaufs 108 zum Betrieb des Kühlmittelkreislaufs 114.

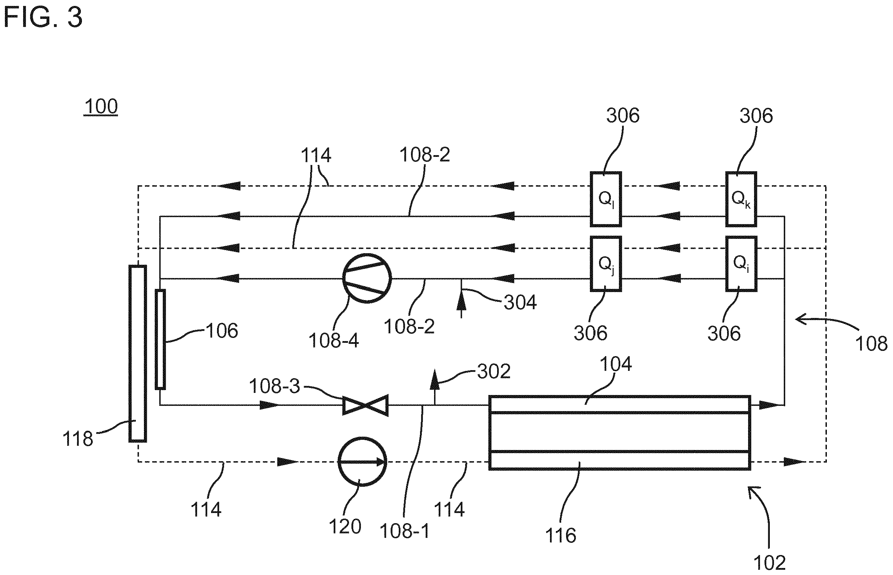

Figur 3 zeigt ein Ausführungsbeispiel der Vorrichtung 100, dessen Merkmale mit jeder Ausgestaltung gemäß der anderen Ausführungsbeispiele kombinierbar sind. Im in Figur 3 gezeigten Ausführungsbeispiel sind Schnittstellen 302 und 304 im Kältemittelkreislauf 108 zur Klimatisierung des Fahrgastraums vorgesehen. Beispielsweise ist an der ersten Strömungsrichtung 108-1 zwischen Expansionsventil 108-3 und speicherseitigem Wärmeübertrager 104 die Schnittstelle 302 für einen Zulauf zu einer Klimaanlage (englisch: Heating, Ventilation and Airconditioning oder HVAC) vorgesehen. An der zweiten Strömungsrichtung 108-2 im Kältemittelkreislauf 108 ist zwischen dem speicherseitigen Wärmeübertrager 104 und dem Kompressor 108-4 die Schnittstelle 304 für einen Auslass der Klimaanlage vorgesehen.

Alternativ oder ergänzend kann die Temperatur einer Vielzahl von Komponenten 306 des Kraftfahrzeugs mittels des Kältemittelkreislaufs 108 und/oder des Kühlmittelkreislaufs 114 gesteuert (insbesondere geregelt und/oder gekühlt) werden. Hierzu steht eine Vielzahl verschiedener Verschaltungskombinationen der Komponenten 306 untereinander und bezüglich des Traktionsenergiespeichers 102 in den Kreisläufen 108 und 114 zur Verfügung. Zumindest einzelne der Komponenten 306 können in Reihe und/oder parallel zueinander und/oder bezüglich der Wärmeüberträger 104 und 116 des Traktionsenergiespeichers 102 angeordnet sein. Die Komponenten 306 können insbesondere wärmegenerierende Komponenten des Kraftfahrzeugs umfassen.

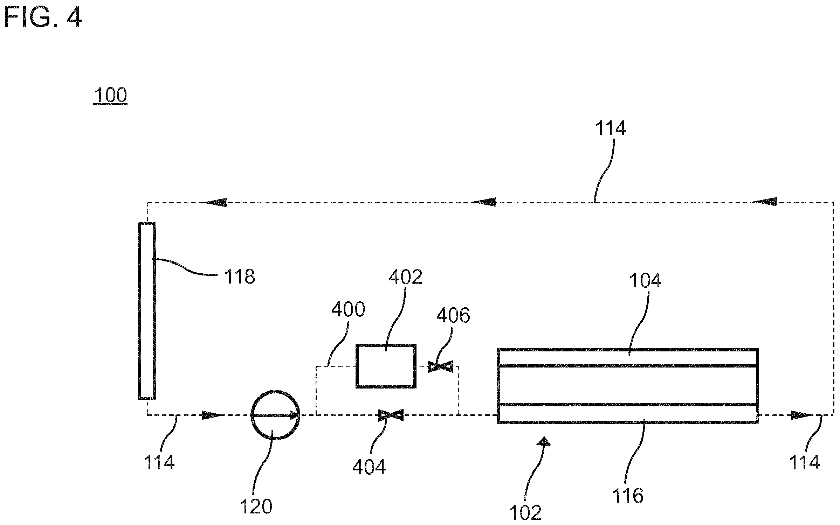

Figur 4 zeigt schematisch ein Blockschaltbild eines heizenden Betriebszustands eines Ausführungsbeispiels der Vorrichtung 100. Die im Ausführungsbeispiel der Figur 4 gezeigten Merkmale sind mit jedem Ausführungsbeispiel kombinierbar. In kalten Wintermonaten wird der Traktionsenergiespeicher 102 beheizt. Hierzu ist im Kühlmittelkreislauf 114 stromauf des konvektiven Wärmeübertragers 116 des Traktionsenergiespeichers 102, vorzugsweise stromab der Umwälzpumpe 120, ein Nebenzweig 400 des Kühlmittelkreislaufs 114 angeordnet. Im Nebenzweig 400 ist eine elektrische Heizquelle 402, beispielsweise eine Hochvoltheizquelle (HVH) zur Erwärmung des Kühlmittels im Kühlmittelkreislauf 114 angeordnet. Durch alternierendes Öffnen eines ersten Ventils 404 parallel geschalten zur Heizquelle 402 und eines zweiten Ventils 406 in Reihe mit der Heizquelle 402 kann die Heizquelle 402 wahlweise (beispielsweise gesteuert durch die Steuerungseinheit 122) vom Kühlmittel des Kühlmittelkreislaufs 114 durchströmt werden. In einer vereinfachten Ausgestaltung kann auf eine Strömungssteuerung des Nebenzweigs 400 mittels der Ventile 404 und 406 verzichtet werden, und die elektrische Heizquelle 402 permanent dem konvektiven Wärmeübertrager 116 vorgeschaltet sein. Das heißt, die Heizquelle 402 kann parallel (durch den Nebenzweig 400) oder seriell im Kühlmittelkreislauf 114 eingebaut sein. In letzterem Fall kann sich die Steuerung zum Beheizen des Traktionsenergiespeichers 102 auf die Steuerung des Heizstroms für die Heizquelle 402 beschränken.

Alternativ oder ergänzend zum in Figur 4 gezeigten Beheizen des Traktionsenergiespeichers 102 kann der linksläufige Kreisprozess des Kältemittelkreislaufs 108 als Wärmepumpe im zweiten Betriebszustand des Kältemittelkreislaufs 108 den Traktionsenergiespeicher 102 erwärmen.

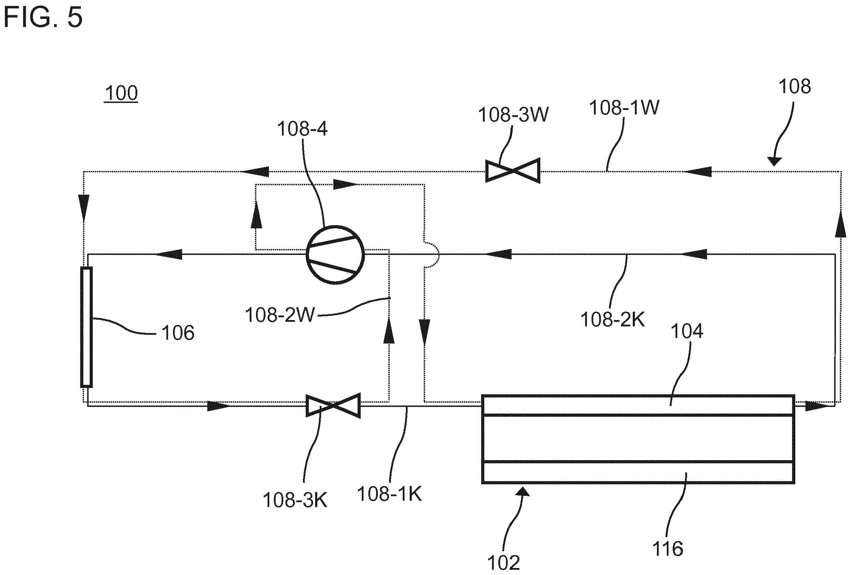

Der linksläufige Kreisprozess des Kältemittelkreislaufs 108 nutzt im ersten Betriebszustand (d. h. als Kältemaschine, in Figur 5 bezeichnet durch ein angefügtes "K") die mit einer durchgezogenen Linie im Blockschaltbild der Figur 5 dargestellten Leitungen. Im zweiten Betriebszustand des Kältemittelkreislaufs 108 (d. h. als Wärmepumpe, in Figur 5 bezeichnet durch ein angefügtes "W") nutzt die Vorrichtung 100 Leitungen für den Kältemittelkreislauf 108, die im Blockschaltbild der Figur 5 durch eine gestrichelte Linie dargestellt sind. Die jeweils erste Strömungsrichtung zwischen den Wärmeüberträgern 104 und 106 für den flüssigen Aggregatzustand des Kältemittels sind mit den Bezugszeichen 108-1K und 108-1W für den ersten bzw. zweiten Betriebszustand des Kältemittelkreislaufs 108 versehen. Entsprechendes gilt für die zweite Strömungsrichtung des gasförmigen Aggregatzustands des Kältemittels und für das Expansionsventil in der ersten Strömungsrichtung. Vorzugsweise wird in beiden Betriebszuständen des Kältemittelkreislaufs 108 derselbe Kompressor 108-4 eingesetzt. Das durch die Steuerungseinheit 122 gesteuerte Umschalten zwischen dem ersten und dem zweiten Betriebszustand erfolgt durch entsprechend angeordnete Wegeventile.

So kann die Steuerungseinheit 122, beispielsweise mit der in Figur 2 gezeigten Temperaturabhängigkeit 200, die Wärme oder die Kälte erzeugen zur Heizung oder zur Kühlung des Traktionsenergiespeichers 102 im ersten bzw. zweiten Betriebszustand des Kältemittelkreislaufs 108.

Auch bei dem in Figur 5 schematisch dargestellten, zwischen dem ersten und dem zweiten Betriebszustand umschaltbaren Kältemittelkreislauf 108 sind optional Schnittstellen zur Klimatisierung des Fahrgastraums vorgesehen. Insbesondere kann im zweiten Betriebszustand des Kältemittelkreislaufs 108 dieser als Wärmepumpe zur Beheizung des Fahrgastraums dienen. Alternativ oder ergänzend können die weiteren Komponenten 306 des Kraftfahrzeugs im zweiten Betriebszustand, also mithilfe des Kältemittelkreislaufs 108 als Wärmepumpe, beheizt werden.

Das Expansionsventil 108-3 (sowohl für den ersten Betriebszustand als auch für den zweiten Betriebszustand des Kältemittelkreislaufs 108) kann eine Blende mit Bohrung oder einen verstellbaren (durch die Steuerungseinheit 122 steuerbaren) Querschnitt aufweisen. Zur Steuerung des ersten Betriebszustands, des zweiten Betriebszustands und/oder des Betriebs des Kühlmittelkreislaufs 114 steht die Steuerungseinheit 122 in Signalverbindung mit dem steuerbaren Expansionsventil 108-3, dem Kompressor 108-4, der Umwälzpumpe 120 und einem Temperatursensor 124 zur Erfassung der Ist-Temperatur des Traktionsenergiespeichers 102 (genauer: der Ist-Temperatur der Zellen 110 des Traktionsenergiespeichers 102).

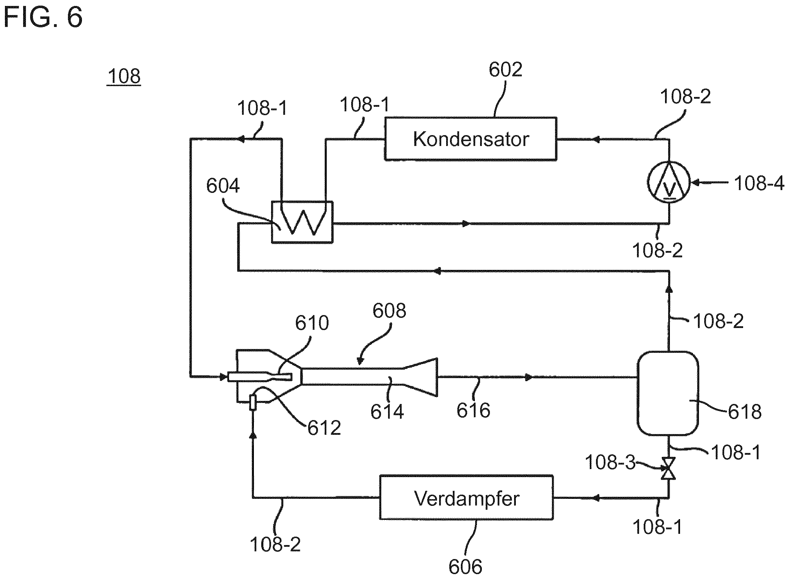

Figur 6 zeigt in einem schematischen Blockschaltbild eine Weiterbildung des Kältemittelkreislaufs 108, bei dem am Kondensator 602 (also am umgebungsseitigen Wärmeübertrager 106 im ersten Betriebszustand oder am speicherseitigen Wärmeübertrager 104 im zweiten Betriebszustand) ein regenerativer Wärmeübertrager 604 angeordnet ist.

Alternativ oder ergänzend ist am Verdampfer 606 des Kältemittelkreislaufs 108 (d. h. am speicherseitigen Wärmeübertrager 104 im ersten Betriebszustand oder am umgebungsseitigen Wärmeübertrager 106 im zweiten Betriebszustand) ein Ejektor 608 angeordnet. Der Ejektor 608 ist mit einem ersten Zulauf 610 zu einer Treibdüse für den flüssigen Aggregatzustand des Kältemittels stromabwärts des Kondensators 602 (und des regenerativen Wärmeübertragers 604) angeordnet. Der Ejektor 608 ist mit seinem zweiten Zulauf 612 für den gasförmigen Aggregatzustand des Kältemittels als Saugmedium stromabwärts des Verdampfers 606 angeordnet. Am Ende des Ejektors 608 wird in dessen Diffusor 614 das Phasengemisch verdichtet und über eine Leitung 616 einem Separator 618 zugeführt. Im Separator 618 wird der gasförmige Aggregatzustand vom flüssigen Aggregatzustand des Kältemittels getrennt. Das gasförmige Kältemittel strömt (gegebenenfalls durch den regenerativen Wärmeübertrager 604) zum Kompressor 108-4. Das flüssige Kältemittel sammelt sich im Separator 618 und wird über das Expansionsventil 108-3 dem Verdampfer 606 zugeführt.

Ferner kann jedes Ausführungsbeispiel der Vorrichtung 100 mit folgenden Merkmalen ausgestattet sein und folgende Vorteilen ermöglichen. Der Traktionsenergiespeicher 102 kann durch die beiden Kühl- und Kältemittelkreisläufe 108 und 114 aufgeheizt und/oder gekühlt werden. Zusätzliche Wärmequellen 306 im Kraftfahrzeug können durch die beiden hydraulisch getrennten Kreisläufen 108 und 114 gekühlt werden.

Die Vorrichtung 100 kann ein Kühlen und/oder ein Beheizen des Traktionsenergiespeichers 102 mittels des Kühlmittelkreislaufs 114 und des Kältemittelkreislaufs 108 ohne Energietransformation zwischen beiden Kreisläufen erreichen. D.h., die Kreisläufe 108 und 114 können thermisch entkoppelt sein.

Vorzugsweise sind der Kühlmittelkreislauf 114 und Kältemittelkreislauf 108 nicht thermisch gekoppelt. Der Verdampfer (104 und 106 im ersten bzw. zweiten Betriebszustand) des Kältemittelkreislaufs 108 ist keine Wärmesenke für den Kühlmittelkreislauf 114. Der Kondensator (106 und 104 im ersten bzw. zweiten Betriebszustand) des Kältemittelkreislaufs 108 ist keine Wärmequelle für den Kühlmittelkreislauf 114.

Der Radiator 118 des Kühlmittelkreislaufs 114 und der umgebungsseitige Wärmeübertrager 106 (d.h. der Kondensator und Verdampfer im ersten bzw. zweiten Betriebszustand des Kältemittelkreislaufs 108) des Kältemittelkreislaufs 108 können im Kraftfahrzeug nach Belieben eingebaut werden. Beispielsweise können der Radiator 118 und der umgebungsseitige Wärmeübertrager 106 an der Stirnseite des Kraftfahrzeugs direkt durch die Kühlluft angeströmt sein, im Heck (beispielsweise wie in einem Bus) quer zur Fahrtrichtung angeströmt sein und/oder auf dem Dach längs oder quer der Fahrtrichtung eingebaut sein.

Das Kältemittel kann ein organisches oder anorganisches Fluid und/oder ein Fluid mit organischen oder anorganischen Komponenten umfassen. Insbesondere kann das Kältemittel Ammoniak, Kohlenstoffdioxid, ein anderes anorganisches Kältemittel (beispielsweise gemäß DIN 8960, Abschnitt 6.3.2) oder Kohlenwasserstoffe umfassen. Insbesondere kann das Kältemittel ein zeotropes Gemisch von Kohlenwasserstoffen umfassen.

Der Kältemittelkreislauf 108 kann mit einem oder ohne einen regenerativen Wärmeübertrager 604 realisiert sein. Alternativ oder in Kombination kann der Kältemittelkreislauf 108 mit einem oder ohne einen Ejektor 608 für die Reduzierung der Antriebsleistung des Verdichters 108-4 ausgestattet sein.

Der Traktionsenergiespeicher 102 ist wahlweise mit dem Kühl- oder Kältemittel beheizbar oder kühlbar. Der Traktionsenergiespeicher 102 umfasst zumindest zwei eingebaute separate Wärmeübertrager 104 und 116 für das Kühlmittel (auch: Kühlmittelfluid) bzw. für das Kältemittel (auch: Kältemittelfluid).

Der umgebungsseitige Wärmeübertrager 106 und der speicherseitige Wärmeübertrager 104 sind jeweils als ein Verdampfer und/oder ein Kondensator zur Phasenumwandlung des Kältemittels ausgebildet. Im umgebungsseitigen Wärmeübertrager 106 und im speicherseitigen Wärmeübertrager 104 sind ein fühlbarer und ein latenter Wärmestrom übertragbar. Der konvektive Wärmeübertrager 116 ist zur Übertragung eines konvektiven Wärmestroms ausgebildet.

Die Komponenten 306 können elektrische und/oder mechanische Komponenten für Personenkraftfahrzeuge, Lastkraftwagen oder Busse umfassen. Die Komponenten 306 des Kraftfahrzeugs, die mit Kühl- oder Kältemittel beheizt oder gekühlt sind, können jeweils zumindest zwei eingebaute separate Wärmeübertrager umfassen. Zumindest eine der Komponenten 306 kann einen (beispielsweise konvektiven und/oder phasenumwandelnden) Wärmeübertrager für das Kältemittel und einen konvektiven Wärmeübertragerfür das Kühlmittel umfassen. D.h., die Komponenten 306, die an den Kältemittelkreislauf 108 angeschlossen sind, können einen Verdampfer und/oder einen Kondensator zur Phasenumwandlung des Kältemittels aufweisen, in dem ein fühlbarer und ein latenter Wärmestrom übertragen wird. Die nämlichen oder weitere Komponenten 306, die an den Kühlmittelkreislauf 114 angeschlossen sind, können einen konvektiven Wärmeübertrager umfassen, in dem ein konvektiver Wärmestrom übertragen wird.

Der Kühlmittelkreislauf 114 kann mit einer oder ohne eine Wärmequelle 402, beispielsweise Heizelement oder Heizkörper, ausgestattet sein. Die Wärmequelle 402 kann elektrisch beheizt sein, beispielsweise gespeist aus dem Traktionsenergiespeicher. Alternativ oder ergänzend kann die Wärmequelle 402 mit einem Kraftstoffbrenner ausgestattet sein.

Der Kältemittelkreislauf 108 kann (beispielsweise in einem Diagramm mit Temperatur auf der vertikalen Achse und Entropie auf der horizontalen Achse) einen linksläufigen Kältemittelkreisprozess umfassen. Mit anderen Worten, der Kältemittelkreisprozess 108 kann als Wärmetransformator, insbesondere als Kältemaschine und/oder Wärmepumpe, realisiert sein. Jeder linksläufige Kältemittelkreisprozess kann ein Expansionsventil umfassen. Das Expansionsventil 108-3 oder die Expansionsventile 108-3K und 108-3W des Kältemittelkreislaufs 108 können geregelt oder ungeregelt sein.

Der Traktionsenergiespeicher 102 kann ein Kühlpaket umfassen. Das Kühlpaket kann den konvektiven Wärmeübertrager 116 und den speicherseitigen Wärmeübertrager 104 zur Phasenumwandlung umfassen. Ein Herstellungsverfahren des Kühlpakets, beispielsweise des Traktionsenergiespeichers 102, kann den Einbau der Wärmeüberträger 104 und 116 in der einen oder der anderen Einbaureihenfolge umfassen. Der konvektive Wärmeübertrager 116 kann vor oder nach dem speicherseitigen Wärmeübertrager 104 (d.h., dem Kondensator und/oder Verdampfer) eingebaut werden. Alternativ oder ergänzend können der konvektive Wärmeübertrager 116 und der speicherseitige Wärmeübertrager 104 übereinander (d.h. in einer Sandwich-Anordnung) angeordnet sein. D.h. der Wärmekontakt des einen Wärmeübertragers erfolgt durch den Wärmekontakt des anderen Wärmeübertragers. Ferner können der konvektive Wärmeübertrager 116 und der speicherseitige Wärmeübertrager 104 an getrennten Wärmekontaktflächen (beispielsweise an gegenüberliegenden Flächen) am Traktionsenergiespeicher 102 angeordnet sein (beispielsweise in einer Side-by-Side-Anordnung).

Der Kühlmittelkreislauf 114 kann eine mechanischen Umwälzpumpe 120, einen Ausgleichbehälter, eine Wärmequelle 402, eine Wärmesenke und/oder Rohrleitungen umfassen.

Der Kältemittelkreislauf 108 kann einen mechanischen Verdichter oder Kompressor 108-4, einen Kondensator 602 (der beispielsweise als Wärmequelle oder Wärmesenke arbeiten kann), ein Drosselventil oder Expansionsventil 108-3, einen Verdampfer 606 (der beispielsweise als Wärmequelle oder Wärmesenke arbeiten kann), Rohrleitungen, einen Trockner und/oder einen Kältemittelbehälter (beispielsweise einen Separator 618) umfassen.

Die Umwälzpumpe 120 (auch: Kühlmittelpumpe) des Kühlmittelkreislaufs 114 kann (beispielsweise durch die Steuerungseinheit 122) regelbar sein. Alternativ oder ergänzend kann der Kühlmittelkreislauf 114 eine starre Kühlmittelpumpe 120 umfassen.

Obwohl die Erfindung in Bezug auf exemplarische Ausführungsbeispiele beschrieben worden ist, ist es für den Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die vorstehenden Ausführungsbeispiele beschränkt, sondern umfasst alle Ausführungsbeispiele, die in den Bereich der beigefügten Patentansprüche fallen.

### Bezugszeichenliste

- 100: Vorrichtung zur Temperatursteuerung
- 102: Traktionsenergiespeicher
- 104: Speicherseitiger Wärmeübertrager
- 106: Umgebungsseitiger Wärmeübertrager
- 108: Kältemittelkreislauf
- 108-1: Erste Strömungsrichtung des Kältemittelkreislaufs
- 108-2: Zweite Strömungsrichtung des Kältemittelkreislaufs
- 108-3: Expansionsventil
- 108-4: Kompressor
- 110: Zellen des Traktionsenergiespeichers
- 112: Grundkörper des Traktionsenergiespeichers
- 114: Kühlmittelkreislauf
- 116: Konvektiver Wärmeübertrager
- 118: Radiator
- 120: Umwälzpumpe
- 122: Steuerungseinheit
- 124: Temperatursensor des Traktionsenergiespeichers
- 200: Temperaturabhängigkeit
- 202: Ist-Temperatur des Traktionsenergiespeichers
- 204: Soll-Temperatur des Traktionsenergiespeichers
- 206: Schwellwert der Temperaturdifferenz
- 302: Eingangsschnittstelle einer Klimaanlage
- 304: Ausgangsschnittstelle einer Klimaanlage
- 306: Temperaturgesteuerte Komponenten
- 400: Nebenzweig des Kühlmittelkreislaufs
- 402: Heizquelle
- 404: Erstes Ventil
- 406: Zweites Ventil
- 602: Kondensator
- 604: Regenerativer Wärmeübertrager
- 606: Verdampfer
- 608: Ejektor
- 610: Erster Zulauf des Ejektors
- 612: Zweiter Zulauf des Ejektors
- 614: Diffusor
- 616: Leitung des Phasengemischs
- 618: Separator

## Patentansprüche

1. Vorrichtung (100) zur Temperatursteuerung eines Traktionsenergiespeichers (102) eines elektrisch angetriebenen Kraftfahrzeugs, umfassend:
einen Traktionsenergiespeicher (102) zur Speicherung elektrischer Energie, der in Energieaustausch mit einem elektrischen Antriebsstrang des Kraftfahrzeugs steht oder bringbar ist;
einen speicherseitigen Wärmeübertrager (104), der zum Wärmeaustausch in direktem Wärmekontakt mit dem Traktionsenergiespeicher (102) steht;
einen umgebungsseitigen Wärmeübertrager (106), der zum Wärmeaustausch mit einer Umgebung des Kraftfahrzeugs ausgebildet ist; und
einen Kältemittelkreislauf (108), der dazu ausgebildet ist, ein Kältemittel in einem ersten Aggregatzustand dem speicherseitigen Wärmeübertrager (104) und in einem zweiten Aggregatzustand dem umgebungsseitigen Wärmeübertrager (106) zuzuführen,
wobei in einem ersten Betriebszustand des Kältemittelkreislaufs (108) der erste Aggregatzustand einen flüssigen Aggregatzustand des Kältemittels umfasst, der speicherseitige Wärmeübertrager (104) als Verdampfer ausgebildet ist, der zweite Aggregatzustand einen gasförmigen Aggregatzustand des Kältemittels umfasst und der umgebungsseitige Wärmeübertrager (106) als Kondensator ausgebildet ist, und
wobei in einem zweiten Betriebszustand des Kältemittelkreislaufs (108) der erste Aggregatzustand einen gasförmigen Aggregatzustand des Kältemittels umfasst, der speicherseitige Wärmeübertrager (104) als Kondensator ausgebildet ist, der zweite Aggregatzustand einen flüssigen Aggregatzustand des Kältemittels umfasst und der umgebungsseitige Wärmeübertrager (106) als Verdampfer ausgebildet ist,
**gekennzeichnet dadurch, dass** die Vorrichtung (100) ferner eine Steuerungseinheit (122) umfasst, die dazu ausgebildet ist,
abhängig vom Vorzeichen einer Differenz zwischen einer vorgegebenen Soll-Temperatur und einer erfassten Ist-Temperatur (124) des Traktionsenergiespeichers (102) wahlweise den ersten Betriebszustand oder den zweiten Betriebszustand des Kältemittelkreislaufs (108) zu steuern.

2. Vorrichtung nach Anspruch 1, wobei der direkte Wärmekontakt zwischen speicherseitigem Wärmeübertrager (104) und Zellen (110) des Traktionsenergiespeichers (102) ausschließlich durch Wärmeleitung erreicht ist.

3. Vorrichtung nach einem der Ansprüche 1 oder 2, wobei der Traktionsenergiespeicher (102) einen metallischen Grundkörper (112) umfasst, der sich über eine Grundfläche des Traktionsenergiespeichers (102) erstreckt, und wobei der speicherseitige Wärmeübertrager (104) am Grundkörper (112) direkt anliegt oder mit dem Grundkörper (112) integral-einstückig ausgebildet ist.

4. Vorrichtung nach einem der Ansprüche 1 bis 3, ferner umfassend:
einen Kühlmittelkreislauf (114), der einen am Traktionsenergiespeicher (102) angeordneten konvektiven Wärmeübertrager (116), einen Radiator (118) und eine Umwälzpumpe (120) umfasst, wobei die Umwälzpumpe (120) dazu ausgebildet ist, ein Kühlmittel durch den konvektiven Wärmeübertrager (116) und den Radiator (118) umzuwälzen.

5. Vorrichtung nach Anspruch 4, wobei der umgebungsseitige Wärmeübertrager (106) des Kältemittelkreislaufs (108) am Radiator (118) des Kühlmittelkreislaufs (114) angeordnet ist.

6. Vorrichtung nach Anspruch 4 oder 5, ferner umfassend:
eine Steuerungseinheit (122), die dazu ausgebildet ist, abhängig vom Betrag der Differenz zwischen der vorgegebenen Soll-Temperatur und der erfassten Ist-Temperatur (124) des Traktionsenergiespeichers (102) wahlweise entweder den Kältemittelkreislauf (108) oder den Kühlmittelkreislauf (114) zu steuern.

7. Vorrichtung nach Anspruch 6, wobei die Steuerungseinheit (122) dazu ausgebildet ist, falls der Differenzbetrag größer als ein vorbestimmter Schwellwert ist, den Kältemittelkreislauf (108) zu steuern, und/oder falls der Differenzbetrag kleiner als der vorbestimmte Schwellwert ist, den Kühlmittelkreislauf (114) zu steuern.

8. Vorrichtung nach einem der Ansprüche 4 bis 7, wobei der Kältemittelkreislauf (108) und der Kühlmittelkreislauf (114) voneinander hydraulisch getrennt und/oder thermisch entkoppelt sind.

9. Vorrichtung nach einem der Ansprüche 1 bis 8, wobei am umgebungsseitigen Wärmeübertrager (106) ein regenerativer Wärmeübertrager (604) angeordnet ist.

10. Vorrichtung nach einem der Ansprüche 1 bis 9, wobei am speicherseitigen Wärmeübertrager (104) ein Ejektor (608) angeordnet ist.

11. Kraftfahrzeug, insbesondere ein Nutzfahrzeug, umfassend eine Vorrichtung (100) gemäß einem der Ansprüche 1 bis 10.

## Claims

1. An apparatus (100) for controlling the temperature of a traction energy storage device (102) of an electrically driven motor vehicle, comprising:
a traction energy storage device (102) for storing electrical energy which exchanges energy or can exchange energy with an electrical drive train of the motor vehicle;
a storage device-side heat exchanger (104) which is in direct thermal contact with the traction energy storage device (102) for heat exchange;
a surrounding area-side heat exchanger (106) which is designed to exchange heat with an area surrounding the motor vehicle; and
a refrigerant circuit (108) which is designed to guide a refrigerant in a first state of aggregation to the storage device-side heat exchanger (104) and in a second state of aggregation to the surrounding area-side heat exchanger (106),
wherein, in a first operating state of the refrigerant circuit (108), the first state of aggregation comprises a liquid state of aggregation of the refrigerant, the storage device-side heat exchanger (104) is designed as an evaporator, the second state of aggregation comprises a gaseous state of aggregation of the refrigerant and the surrounding area-side heat exchanger (106) is designed as a condenser, and
wherein, in a second operating state of the coolant circuit (108), the first state of aggregation comprises a gaseous state of aggregation of the refrigerant, the storage device-side heat exchanger (104) is designed as a condenser, the second state of aggregation comprises a liquid state of aggregation of the refrigerant, and the surrounding area-side heat exchanger (106) is designed as an evaporator,
**characterized in that** the apparatus (100) further comprises a control unit (122) which is designed to selectively control the first operating state or the second operating state of the refrigerant circuit (108) depending on the mathematical sign of a difference between a prespecified target temperature and a detected actual temperature (124) of the traction energy storage device (102).

2. The apparatus according to Claim 1, wherein the direct thermal contact between the storage device-side heat exchanger (104) and cells (110) of the traction energy storage device (102) is achieved solely by thermal conduction.

3. The apparatus according to either of Claims 1 and 2, wherein the traction energy storage device (102) comprises a metal main body (112) which extends over a base surface of the traction energy storage device (102), and wherein the storage device-side heat exchanger (104) bears directly against the main body (112) or is formed integrally in one piece with the main body (112).

4. The apparatus according to one of Claims 1 to 3, further comprising:
a coolant circuit (114) which comprises a convective heat exchanger (116) which is arranged on the traction energy storage device (102), a radiator (118) and a circulation pump (120), wherein the circulation pump (120) is designed to circulate a coolant through the convective heat exchanger (116) and the radiator (118).

5. The apparatus according to Claim 4, wherein the surrounding area-side heat exchanger (106) of the refrigerant circuit (108) is arranged on the radiator (118) of the coolant circuit (114).

6. The apparatus according to Claim 4 or 5, further comprising:
a control unit (122) which is designed to selectively control either the refrigerant circuit (108) or the coolant circuit (114) depending on the magnitude of the difference between the prespecified target temperature and the detected actual temperature (124) of the traction energy storage device (102).

7. The apparatus according to Claim 6, wherein the control unit (122) is designed to control the refrigerant circuit (108) if the magnitude of the difference is greater than a predetermined threshold value, and/or to control the coolant circuit (114) if the magnitude of the difference is less than the predetermined threshold value.

8. The apparatus according to one of Claims 4 to 7, wherein the refrigerant circuit (108) and the coolant circuit (114) are hydraulically isolated and/or thermally decoupled from one another.

9. The apparatus according to one of Claims 1 to 8, wherein a regenerative heat exchanger (604) is arranged on the surrounding area-side heat exchanger (106).

10. The apparatus according to one of Claims 1 to 9, wherein an ejector (608) is arranged on the storage device-side heat exchanger (104).

11. A motor vehicle, in particular a utility vehicle, comprising an apparatus (100) according to one of Claims 1 to 10.

## Revendications

1. Dispositif (100) de régulation de température d'un accumulateur d'énergie de traction (102) d'un véhicule automobile à entraînement électrique, comprenant :
un accumulateur d'énergie de traction (102) pour accumuler l'énergie électrique, qui est ou peut être mis en échange énergétique avec un groupe motopropulseur électrique du véhicule automobile ;
un échangeur thermique côté accumulateur (104) qui est en contact thermique direct avec l'accumulateur d'énergie de traction (102) en vue de l'échange thermique ;
un échangeur thermique côté environnement (106) qui est réalisé pour l'échange thermique avec un environnement du véhicule automobile ; et
un circuit de fluide frigorigène (108) qui est réalisé pour amener à l'échangeur thermique côté accumulateur (104) un fluide frigorigène dans un premier état physique et pour l'amener à l'échangeur thermique côté environnement (106) dans un deuxième état physique,
dans lequel, dans un premier état de fonctionnement du circuit de fluide frigorigène (108), le premier état physique comprend un état physique liquide du fluide frigorigène, l'échangeur thermique côté accumulateur (104) est réalisé sous la forme d'un évaporateur, le deuxième état physique comprend un état physique gazeux du fluide frigorigène, et l'échangeur thermique côté environnement (106) est réalisé sous la forme d'un condensateur, et
dans lequel, dans un deuxième état de fonctionnement du circuit de fluide frigorigène (108), le premier état physique comprend un état physique gazeux du fluide frigorigène, l'échangeur thermique côté accumulateur (104) est réalisé sous la forme d'un condensateur, le deuxième état physique comprend un état physique liquide du fluide frigorigène, et l'échangeur thermique côté environnement (106) est réalisé sous la forme d'un évaporateur,
**caractérisé en ce que** le dispositif (100) comprend en outre une unité de commande (122) qui est réalisée, en fonction du signe d'une différence entre une température théorique spécifiée et une température réelle détectée (124) de l'accumulateur d'énergie de traction (102), pour commander sélectivement le premier état de fonctionnement ou le deuxième état de fonctionnement du circuit de fluide frigorigène (108).

2. Dispositif selon la revendication 1, dans lequel le contact thermique direct entre l'échangeur thermique côté accumulateur (104) et des cellules (110) de l'accumulateur d'énergie de traction (102) est obtenu exclusivement par conduction thermique.

3. Dispositif selon l'une quelconque des revendications 1 et 2, dans lequel l'accumulateur d'énergie de traction (102) comprend un corps de base métallique (112) qui s'étend sur une surface de base de l'accumulateur d'énergie de traction (102), et dans lequel l'échangeur thermique côté accumulateur (104) s'appuie directement sur ou est réalisé intégralement avec le corps de base (112).

4. Dispositif selon l'une quelconque des revendications 1 à 3, comprenant en outre :
un circuit de fluide de refroidissement (114) qui comprend un échangeur thermique par convection (116) disposé sur l'accumulateur d'énergie de traction (102), un radiateur (118) et une pompe de recirculation (120), la pompe de recirculation (120) étant réalisée pour faire recirculer un fluide de refroidissement à travers l'échangeur thermique par convection (116) et le radiateur (118).

5. Dispositif selon la revendication 4, dans lequel l'échangeur thermique côté environnement (106) du circuit de fluide frigorigène (108) est disposé au niveau du radiateur (118) du circuit de fluide de refroidissement (114).

6. Dispositif selon la revendication 4 ou 5, comprenant en outre :
une unité de commande (122) qui est réalisée pour commander, en fonction de la grandeur de la différence entre la température théorique spécifiée et la température réelle détectée (124) de l'accumulateur d'énergie de traction (102), sélectivement soit le circuit de fluide frigorigène (108), soit le circuit de fluide de refroidissement (114).

7. Dispositif selon la revendication 6, dans lequel l'unité de commande (122) est réalisée, si la grandeur de différence est supérieure à une valeur seuil prédéterminée, pour commander le circuit de fluide frigorigène (108), et/ou si la grandeur de différence est inférieure à la valeur seuil prédéterminée, pour commander le circuit de fluide de refroidissement (114) .

8. Dispositif selon l'une quelconque des revendications 4 à 7, dans lequel le circuit de fluide frigorigène (108) et le circuit de fluide de refroidissement (114) sont hydrauliquement séparés et/ou thermiquement découplés l'un de l'autre.

9. Dispositif selon l'une quelconque des revendications 1 à 8, dans lequel un échangeur thermique à récupération (604) est disposé au niveau de l'échangeur thermique côté environnement (106).

10. Dispositif selon l'une quelconque des revendications 1 à 9, dans lequel un éjecteur (608) est disposé au niveau de l'échangeur thermique côté accumulateur (104).

11. Véhicule automobile, en particulier un véhicule utilitaire, comprenant un dispositif (100) selon l'une quelconque des revendications 1 à 10.
